# EUROPÄISCHE PATENTSCHRIFT

(11) **EP 0 538 664 B1**
(45) Veröffentlichungstag und Bekanntmachung des Hinweises auf die Patenterteilung: **13.12.1995**
(21) Anmeldenummer: 92116907.4
(22) Anmeldetag: 02.10.1992
(51) Int. Cl.: G01J 3/28, G01D 5/26, G01N 21/75

(54) **Verfahren und Anordnung zur Bestimmung der durch physikalische bzw. chemische Effekte hervorgerufenen optischen Spektralverschiebung**
Method and device for determining optical spectral shifts caused by physical or chemical effects
Procédé et dispositif pour la détermination des décalages de spectres optiques causés par des effets physiques ou chimiques

(30) Priorität: 05.10.1991 DE 4133125
(43) Veröffentlichungstag der Anmeldung: 28.04.1993
(73) Patentinhaber: ULTRAKUST electronic GmbH, 94239 Gotteszell (DE)
(72) Erfinder: Ecke, Wolfgang, O-6900 Jena (DE); Hoppe, Lutz, O-6900 Jena (DE); Reuter, Thomas, O-6900 Jena (DE); Schwotzer, Günter, O-6902 Jena (DE)
(74) Vertreter: Pfeiffer, Rolf-Gerd

(56) Entgegenhaltungen:
- EP-A- 0 146 522
- EP-A- 0 345 773
- EP-A- 0 400 342
- DE-A- 3 619 017
- US-A- 4 241 738

## Beschreibung

Faseroptische Sensoren zur Bestimmung physikalischer und chemischer Meßgrößen sind seit längerem bekannt. Die meisten von ihnen nutzen zur Bestimmung der Meßgröße die durch diese im Sensor hervorgerufene Intensitätsänderung. Bei all diesen intensitätsmodulierten Sensortypen stellen die erforderlichen Maßnahmen zur Stabilisierung der durch die Lichtleitfasern geleiteten Lichtintensitäten eine sich kostenungünstig auswirkende Größe dar, weshalb der erhoffte Marktdurchbruch dieser in vielen Bereichen der Forschung und Technik einsetzbaren Sensoren mit ihren vorteilhaften Einsatzbedingungen bislang ausblieb.
In GB 2 138 936 wird ein optisches Sensorsystem vorgeschlagen, welches Licht zweier unterschiedlicher Wellenlängen λ₁ und λ₂ in der Weise verwendet, daß das Licht der einen Wellenlänge bis unmittelbar vor den eigentlichen Sensor und zurück geleitet wird, während das Licht der anderen Wellenlänge nur einen ähnlichen optischen Weg nimmt und darüber hinaus noch vom eigentlichen Sensor beeinflußt wird. Die Messung des erstgenannten Lichtes wird zur Kompensation irgendwelcher Transmissionsänderungen der zum Sensor führenden Lichtleitfaser verwendet. Die Transmissionsänderungen kompensierende Wirkung dieser Anordnung muß unbefriedigend sein, weil:
- die optischen Wege, die beide Lichtarten zurücklegen, bezüglich ihrer transmissionsbeeinflussenden Charakteristika nicht gleich sind,
- für beide Lichtarten getrennte Detektoren benutzt werden und
- eine "Subtraktion" der beiden Meßsignale nicht die erhoffte Kompensationswirkung bringen kann.

In SPIE Vol. 1011 Fiber Optic Sensors III (1988) ist ein Drucksensor beschrieben, bei dem ein miniaturisiertes Fabry-Perot-Interferometer an eine Lichtleitfaser angekoppelt ist, bei dem das Interferenzspektrum zur Auswertung von Druckänderungen herangezogen wird.
Dazu wird das Fabry-Perot-Interferometer mit einer breitbandigen Lichtquelle beleuchtet und das vom Interferometer gefilterte Licht (Interferenzspektrum) über ein optisches Beugungsgitter auf einen Zeilendetektor abgebildet. Mit dem Zeilendetektor werden die spektralen Lagen der absoluten Interferenzmaxima oder -minima detektiert. Die Verschiebungen dieser Interferenzextrema sind ein Maß für die zu messenden Druckänderungen. Diese Anordnung liefert zwar von der Lichtintensität unabhängige Meßergebnisse, sie besitzt aber die Genauigkeit einschränkende Nachteile, weil die so bestimmte spektrale Lage der Interferenzextrema durch die spektrale Emissionscharakteristik der Lichtquelle und durch die spektral abhängige Dämpfung der gesamten optischen Übertragungsstrecke einschließlich des Beugungsgitters und der Abbildungsoptik und durch den spektralen Empfindlichkeitsverlauf des Zeilendetektors beeinflußt, d.h. verfälscht, wird. Demzufolge liefert diese Anordnung auch keine zuverlässigen Meßergebnisse über einen größeren spektralen Meßbereich, wie es bei faseroptischen Sensoren, deren Meßprinzip auf Farbänderungen beruht (wie z.B. einige Arten von Temperatursensoren oder auch chemische Sensoren), von Bedeutung ist.

Desweiteren ist aus US 4,241,738 eine Anordnung bekannt, die zur photometrischen Bestimmung von Hautverfärbungen Anwendung findet, bei der, zwei durch Faserbündel gebildete Lichtleitwege vorgesehen sind, von denen einer als Referenzweg Verwendung findet. Diese Anordnung ermöglicht die Erfassung von Intensitätsanderungen in spektralen Intervallen und dabei den Vergleich relativ grober spektraler Änderungen. Sie ist jedoch nicht geeignet, sehr kleine, von entsprechenden Sensoren erzeugte Spektralverschiebungen mit hinreichender Stabilität und Genauigkeit auszuwerten.

Speziell für Feuchtemessungen ist seit längerem bekannt, daß optische Schichtsysteme, bestehend aus einer oder mehreren dielektrischen Einzelschichten, deren Dicke jeweils ungefähr ein Viertel oder ein Halbes der Wellenlänge des Meßlichtes (λ/4, λ/2) beträgt, porös sind und durch Wasserabsorption ihre Reflexions- und Transmissionseigenschaften ändern, wenn sich der feuchtegehalt der sie umgebenden Luft ändert (vgl. z.B. H. Koch: "Optische Untersuchungen zur Wasserdampfsorption in Aufdampfschichten"; phys. stat. sol., 12 (1965) 533-43). Bei Systemen aus Vielfachschichten ist dieser Effekt deutlicher als bei einer Einfachschicht.
In DE 36 19 017 wird vorgeschlagen, diesen Effekt für einen optisch dielektrischen Feuchtigkeitsmesser zu nutzen. Dazu wird ein solches Schichtsystem auf einen durchscheinenden Träger aufgebracht, der so entstehende teildurchlässige Spiegel in einen optischen Strahlengang schmalbandigen polarisierten Licht gebracht und durch Quotientenbildung aus den in Abhängigkeit von der Feuchteaufnahme sich ändernden reflektierten und durchgelassenen Lichtintensitäten ein feuchteabhängiges Meßsignal gebildet. nach einer solchen Anordnung sind keine kleinen, kompakten und stabilen Feuchtigkeitsmesser bzw. -sensoren herstellbar.
In DE 38 32 185 C2 wird deshalb vorgeschlagen, das poröse und feuchtigkeitsempfindliche Vielfachschichtsystem als interferometrische Anordnung unmittelbar auf einer Oberfläche bzw. der Schnittfläche einer optischen Faser aus Glas oder Kunststoff anzuordnen. Diese Anordnung ermöglicht zwar extrem kleine Meßsondenabmessungen hat aber den Nachteil, daß die mögliche hohe Feuchteempfindlichkeit der interferometrischen Schichtanordnung meßtechnisch nur unbefriedigend genutzt werden kann, weil die in mehrmodigen Lichtleitfasern geführten Lichtmoden in einem großen Winkelbereich auf die feuchteempfindliche Schicht auftreffen und somit die spektrale Filtercharakteristik der Schicht verfälscht und abgeflacht wird. Desweiteren ist der feuchteempfindliche Meßbereich bzw. die Meßempfindlichkeit durch die Wahl der optischen Eigenschaften des Schichtsystems in Verbindung mit der Wahl des Fasertyps und der Wellenlänge des verwendeten Meßlichtes für die praktische Anwendung oftmals einschränkend festgelegt.
Bei diesen Systemen bestehen die selben o.g. Probleme der Intensitätsstabilisierung.

Der Erfindung liegt die Aufgabe zugrunde, ein Verfahren und eine dieses realisierende Anordnungen zur Bestimmung der durch physikalische bzw. chemische Meßgrößen hervorgerufenen optischen Spektralverschiebungen mittels Lichtleitfasersensoren anzugeben, die das Problem der Lichtintensitätsstabilisierung umgehen und zuverlässige Meßwerte über einen größeren Spektralbereich gewährleisten. Die Aufgabe der Erfindung wird durch die in den Kennzeichen der Patentansprüche aufgeführten Verfahrensschritte und Mittel gelöst. Durch die Erfindung gelangen zum einen kostengünstige breitbandige Lichtquellen zum Einsatz und zum anderen kann durch die Art der Referenzbildung und Meßwertermittlung auf zusätzliche Lichtstabilisierungsmaßnahmen gänzlich verzichtet werden.

Die Erfindung soll in den folgenden Ausführungsbeispielen anhand eines faseroptischen Feuchtesensors näher erläutert werden. Dieses Beispiel soll die Erfindung jedoch nicht beschränken, da das Meßverfahren auf alle Sensoren anwendbar ist, bei denen durch physikalische bzw. chemische Effekte optische Spektralverschiebungen auftreten. Dabei zeigt:

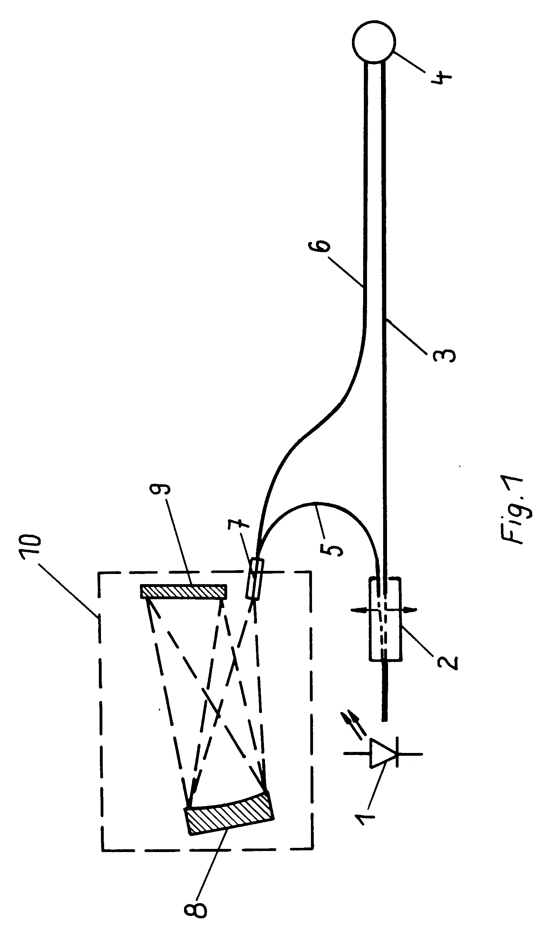

- Fig. 1: eine mögliche erfindungsgemäße Anordnung zur Realisierung des Meßverfahrens gemäß der Erfindung, die ebenfalls durch eine Vielzahl weiterer denkbarer, das Meßverfahren realisierende Ausführungsformen nicht erfindungsbeschränkend wirkt.

Das spektral ungefilterte Licht einer breitbandigen Lichtquelle 1 (LED oder thermische Lichtquelle) wird zunächst über einen Schalter 2 und eine Lichtleitfaser 5 auf ein Beugungsgitter 8 geleitet, an letzerem spektral zerlegt und auf einen zeilenförmigen ortsauflösenden Detektor 9 fokusiert. Das vom Detektor 9 empfangene Signal wird elektronisch verstärkt und abgespeichert. Dieses Signal beinhaltet somit die spektrale Emissionscharakteristik der Lichtquelle 1 und deren Beeinflussung durch die Dämpfungseigenschaften des Übertragungsweges (im wesentlichen der Faser 5) sowie durch die Transformationseigenschaften des Beugungsgitters 8 und die spektrale Empfindlichkeitscharakteristik des zeilenförmigen Detektors 9. Es dient als Bezugssignal für den eigentlichen Meßvorgang. Für den Meßvorgang wird das Licht der Lichtquelle 1 über den optischen Schalter 2 und die Faser 3 zum Sensorelement 4 geleitet, dort zusätzlich durch Absorption, Reflexion, Streuung oder Lumineszenz in Abhängigkeit von der zu messenden Größe spektral beeinflußt und über die Lichtleitfaser 6 auf das Gitter 8 geleitet, dort spektral zerlegt und auf den zeilenförmigen Detektor 9 fokusiert und nach Verstärkung als Meßsignal elektronisch abgespeichert. Dieses Meßsignal unterscheidet sich in seinem spektralen Verlauf, insbesondere bei zweckmäßiger Verwendung von Lichtleitfasern 3, 5 und 6 mit gleichem spektralen Dämpfungsverlauf, in seiner spektralen Verteilung nur durch die von der zu messenden Größe abhängigen spektralen Eigenschaften des Sensorelementes 4 vom Bezugssignal. Durch elektronische Quotientenbildung aus dem Meßsignal und dem Bezugssignal erhält man ein korrigiertes Meßsignal, dessen spektraler Verlauf nur von den spektralen Eigenschaften des Sensorelementes abhängt, die per Definition von der zu messenden Größe abhängen.
Der optische Schalter 2 kann als faseroptisches Schaltelement mit einer Eingangsfaser und zwei Ausgangsfasern oder auch, bei Benutzung von mehreren Lichtquellen und/oder mehreren Sensoren, mit mehreren Eingängen und Ausgängen ausgestattet sein.
Es liegt im Rahmen der Erfindung, die beiden Lichtleitfasern 3 und 6 zwischen Schalter 2 und Sensorelement 4 bzw. zwischen Sensorelement 4 und Polychromatoreingang 7 durch eine Lichtleitfaser mit einem die Lichtleitwege teilenden Element, z.B. einem Y-Koppler, dessen Ausgang mit dem Sensorelement 4 verbunden ist und dessen andere parallele Ausgänge jeweils mit dem Schalter 2 bzw. dem Polychromatoreingang 7 verbunden sind zu ersetzen. Außerdem kann der Schalter 2 auch durch ein das Licht der Lichtquelle 1 nicht schaltbar auf die Lichtleitfasern 3 und 5 aufteilendes Element (z.B. Y-Koppler) zu ersetzen. In diesem Fall werden, um Bezugssignal und Meßsignal getrennt aufnehemen zu können, die Lichtleitfasern 5 und 3 oder 6 mit optischen Verschlüssen versehen, so daß die gewünschten Lichtwege z.B. elektrisch gesteuert gesperrt oder freigegeben werden können.
Bei zeitlich stabilen spektralen Eigenschaften der Lichtquelle 1 und des Polychromators 10 genügt es, das Bezugssignal einmal zu erfassen und alle anderen späteren Meßsignale darauf zu beziehen. In diesem Fall kann anstelle des optischen Schalters 2 und der Lichtleitfasern 5, 3 und 6 und des Sensorelementes 4 eine Lichtleitfaser zwischen Lichtquelle 1 und Polychromatoreingang 7 z.B. durch Steckung eingefügt werden. Für die späteren Meßvorgänge wird diese Lichtleitfaser entfernt und die Lichtleitfasern 3 und 6 mit dem Sensorelement 4 an die Lichtquelle 1 und den Polychromatoreingang 7 angesteckt.

Als Polychromator 10 wird hier ein Bauelement bestehend aus einem optischen Eingang (Blende oder Lichtleitfaser), einem optisch dispersiven Element (z.B. konkaves Beugungsgitter) und einem ortsauflösenden Detektor verstanden, mit dem Licht in seine spektralen Bestandteile zerlegt und dieses gleichzeitig auf den Detektor optisch fokusiert wird.
Die Verwendung eines konkaven optischen Beugungsgitters als dispersives Element im Polychromator ist besonders vorteilhaft, da einerseits in Verbindung mit Diodenzeilen oder CCD-Zeilen als ortsempfindliche fotoelektrische Empfänger hohe spektrale Auflösungen erzielbar sind und keine weiteren optisch abbildende Bauelemente benötigt werden, wie im Falle der Verwendung eines ebenen Gitters. Darüber hinaus besitzt ein Polychromator den Vorteil, daß weder das dispersive Element noch Ein- oder Austrittspalt bzw. der Empfänger bewegt werden müssen und der gesamte optische Spektralbereich gleichzeitig auf dem Detektor zur Verfügung steht.

Bei geringeren Ansprüchen an die spektrale Auflösung kann das Gitter als dispersives Element auch durch ein optisches Verlaufsfilter ersetzt werden. Dazu muß das in die Polychromatoreinheit eintretende Licht durch optisch abbildende Bauelemente (Linsen, Zylinderlinsen) zunächst in ein Lichtband umgeformt werden, welches auf das Verlaufsfilter gerichtet und hinter dem Verlaufsfilter auf einen ortsauflösenden Detektor fokusiert wird.

Zur näheren Illustration des erfindungsgemäßen Verfahrens soll dieses im folgenden ebenfalls am Beispiel der in Fig. 1 dargestellten Anordnung näher erläutert werden.
Ohne Einschränkung des erfindungsgemäßen Gedankens soll das Sensorelement 4 als feuchteempfindliches Element, bestehend aus zwei Lichtleitfasern, deren Endflächen sensorseitig mit einem optischen Substrat optisch und mechanisch verbunden sind, welches auf der den Faserendflächen abgewandten Seite ein feuchte empfindliches optisch reflektierendes Interferenzschichtsystem trägt, ausgebildet sein. Die Verwendung eines reflektierenden Interferenzschichtsystems in der geschilderten Weise ist im Falle von Feuchtigkeitsbestimmungen besonders günstig, weil die Feuchtigkeit ungehindert Zutritt zu dem Schichtsystem hat. Die spektralen Reflexionseigenschaften des Interferenzschichtsystems ändern sich in Abhängigkeit von der von ihm aufgenommenen Feuchtigkeitsmenge. Das wird in der Regel deutlich durch eine spektrale Verschiebung der Reflexionsmaxima bzw. -minima.
Die Lichtquelle 1 wird so ausgewählt, daß ihr Emissionsspektrum mindestens ein Reflexionsmaximum bzw. - minimum bei beliebigen Feuchtigkeiten überdeckt. Diese Bedingung wird beispielsweise von einer LED mit einer Emissionshalbwertsbreite von 40 - 50nm erfüllt. Das erfindungsgemäße Verfahren setzt sich im folgenden aus einer Kalibrierphase und einer Meßphase zusammen. Dabei besteht die Kalibrierphase aus den Schritten:
1.) In einem ersten Schritt wird das Licht der Lichtquelle 1 beispielsweise über den Schalter 2 und die Faser 5 direkt auf den Eingang 7 des Polychromators 10 gegeben und das am Detektor 9 empfangene Signal als Bezugsspektrum abgespeichert.
2.) In einem weiteren Schritt wird das Licht der Lichtquelle 1 beispielsweise über den Schalter 2 und die Faser 3 dem spektral beeinflussenden Sensorelement 4, welches nacheinander definierten Kalibrierfeuchten ausgesetzt wird, zugeführt und über die Faser 6 auf den Eingang 7 des Polychromators 10 geleitet, wo es als Kalibrierspektrum registriert wird.
3.) Die am Detektor 9 bei verschiedenen Kalibrierfeuchten erhaltenen Kalibriersignale werden jeweils durch das unter 1.) gewonnene Signal elektronisch geteilt und die so erhaltenen korrigierten Kalibrierspektren elektronisch abgespeichert. Bei zeitlich instabilen spektralen Änderungen des Bezugsspektrums wird das jeweilige aktuelle Bezugsspektrum unmittelbar vor der Aufnahme eines jeden Kalibrierspektrums gemäß 1.) aufgenommen.
4.) In der Meßphase wird das Sensorelement 4 der zu messenden Feuchte ausgesetzt und analog zu 2.) ein entsprechendes Meßspektrum aufgenommen, welches durch das nach 1.) gewonnene Bezugsspektrum elektronisch geteilt wird, um ein korrigiertes Meßspektrum zu erhalten.
   Bei zeitlich instabilen spektralen Änderungen unabhängig von den durch Feuchteeinwirkungen auf das Sensorelement erzeugten Änderungen empfiehlt es sich auch hier, unmittelbar vor jeder Aufnahme eines Meßspektrums ein aktuelles Bezugsspektrum nach 1.) aufzunehmen, durch das dann das Meßspektrum geteilt wird, um das aktuelle Meßspektrum zu erhalten.
5.) In einem letzten Schritt wird das betreffende korrigierte Meßspektrum mit den abgespeicherten korrigierten Kalibrierspektren verglichen und durch Ermittlung des am besten mit dem korrigierten Meßspektrum übereinstimmenden korrigierten Kalibrierspektrums der dazugehörige Feuchtewert ermittelt.
   Oftmals ist dafür der Vergleich der spektralen Lage der Maxima bzw. Minima der Spektren ausreichend.

## Patentansprüche

1. Verfahren zur Bestimmung der durch physikalische bzw. chemische Effekte hervorgerufenen optischen Spektralverschiebung mittels wenigstens einem derartige Verschiebungen verursachenden Sensor unter Verwendung wellenlängendispersiver Baugruppen und Auswerteeinheiten, dadurch gekennzeichnet, daß
a) Licht einer breitbandigen Lichtquelle über eine einzige Lichtleitfaser dem Spektralverschiebungen verursachenden Sensor zugeführt wird, von diesem über ein dispersives bzw. polychromatisches Bauteil einer Spektralverteilungen registrierenden Auswerteeinheit geleitet und das erhaltene Spektrum abgespeichert wird,
b) das Licht der gleichen Lichtquelle über eine weitere einzige Lichtleitfaser direkt dem dispersiven bzw. polychromatischen Bauteil zugeführt wird, dieses gewonnene Bezugsspektrum abgespeichert wird und
c) in einer wenigstens einmal durchzuführenden Kalibrierphase eine Spektrenregistrierung wie unter a) beschrieben unter Eichbedingungen unter gezielter Veränderung, deren Daten als Kalibrierdaten ebenfalls abgespeichert werden, der zu bestimmenden physikalischen bzw. chemischen Meßgröße vorgenommen wird und
d) das Licht der Lichtquelle wieder über die weitere Lichtleitfaser direkt dem dispersiven bzw. polychromatischen Bauteil zugeführt wird, dieses gewonnene Bezugsspektrum abgespeichert wird und daraufhin
e) durch Quotientenbildung der jeweils nach b) und a) und der nach d) und c) gewonnenen Spektren ein korrigiertes Meß- bzw. ein korrigiertes Kalibrierspektrum gebildet und abgespeichert wird und
f) in einem darauf erfolgenden direkten Vergleich der unter e) gewonnenen Spektren, der Wert für die zu bestimmende physikalische bzw. chemische Meßgröße unter Meßbedingungen unmittelbar ermittelt wird.

2. Verfahren nach Anspruch 1., dadurch gekennzeichnet, daß die genannten Spektren elektronisch abgespeichert werden.

3. Anordnung zur Durchführung des Verfahrens nach Anspruch 1., die wenigstens zwei mit Lichtleitmitteln versehene Lichtleitwege aufweist, von denen einer als Referenzweg dient, gekennzeichnet durch, eine breitbandige Lichtquelle (1) die Licht in eine erste Lichtleitfaser (3) die Teil des ersten Lichtleitwegs ist einkoppelt, wenigstens einem Spektralverschiebungen erzeugenden Sensor (4) der mit der ersten Faser verbunden ist, eine dispersive bzw. polychromatische Baugruppe (10) mit entsprechenden Spektrenauswerteeinheiten, eine zweite Lichtleitfaser (6) die Teil des ersten Lichtleitwegs ist und vom Sensor (4) zur Baugruppe (10) führt und wobei diese Baugruppe (10) ihrerseits mit einer weiteren Lichtleitfaser (5) die den zweiten Lichtleitweg bildet mit der breitbandigen Lichtquelle (1) direkt verbindbar ist.

4. Anordnung nach Anspruch 3., dadurch gekennzeichnet, daß die Verbindung der weiteren Lichtleitfaser (5) mit der Lichtquelle (1) über einen faseroptischen Schalter (2) erfolgt.

5. Anordnung nach Anspruch 3., dadurch gekennzeichnet, daß die weitere Lichtleitfaser (5) alternativ gegen die über die erste und zweite Lichtleitfaser (3, 6) geschaffene Verbindung austauschbar ist.

6. Anordnung nach Anspruch 3., dadurch gekennzeichnet, daß die Verbindungen über die erste und zweite Lichtleitfasern (3, 6) mit Verbindung über die weitere Lichtleitfaser (5) wahlweise wechselseitig über jeweils optische Verschlüsse unterbrochen oder freigegeben sind.

7. Anordnung nach Anspruch 3., dadurch gekennzeichnet, daß als Spektralverschiebungen erzeugender Sensor ein Feuchtesensor eingesetzt ist.

8. Anordnung nach Anspruch 3., dadurch gekennzeichnet, daß als Spektralverschiebungen erzeugender Sensor ein seine Transmission bzw. Reflexion in Abhängigkeit von der Temperatur ändernder Sensor eingesetzt ist.

9. Anordnung nach Anspruch 3., dadurch gekennzeichnet, daß als Spektralverschiebungen erzeugender Sensor ein chemischer Sensor eingesetzt ist.

10. Anordnung nach Anspruch 3., dadurch gekennzeichnet, daß mehrere unterschiedliche oder gleiche physikalische und/oder chemische Größen erfassende Sensoren eingesetzt sind.

## Claims

1. Method for determining optical spectral shifts due to physical and chemical, respectively, effects caused by at least one sensor under use of wavelength dispersing members and evaluation units, characterised in that
a) light emitted by a broadband light source is fed via a single optical fibre into said sensor causing the spectral shifts, and from there via a dispersing and polychromatical, respectively, component to an evaluation unit recording the spectral shifts and storing the resulting spectrum,
b) the fight from said light source is directly fed via a further single optical fibre into said dispersing and polychromatic, respectively, component, the resulting reference spectrum being stored, and
c) in the course of a calibration phase performed at least once a recording of spectra of the physical and chemical, respectively, measuring values is carried out as described in step a), under calibration conditions subject to intentional variations, which data being also recorded as calibration data,
d) the light from said light source is again directly fed via said further optical fibre into said dispersive and polychromatic, respectively, component, the reference spectrum obtained being stored and
e) by quotient formation from the spectra obtained according to b) and a) and according to d) and c) a corrected measuring and a corrected calibration, respectively, spectrum is obtained and stored, and
f) in a subsequent direct comparison of the spectra according to e) the value for the physical and chemical, respectively, measuring value is directly obtained under measuring conditions.

2. Method as claimed in claim 1, wherein the spectra mentioned are electronically stored.

3. Arrangement for performing the method of claim 1 comprising at least two light paths including fight directing means, one of said light paths being employed as a reference path, characterised in providing in said first light path
a broadband light source (1) coupling light into a first optical fibre (3), said optical fibre being member of said first fight path,
at least one sensor (4) producing a spectral shift and being connected to said first optical fibre,
a dispersing and polychromatic, respectively, member (10) including respective spectra evaluation units,
a second optical fibre (6) being a component of said first light path and connecting said sensor (4) with said member (10), said member (10), in turn, being connected to a further optical fibre (5) embodying said second light path and being directly connectable to said broadband light source.

4. Arrangement as claimed in claim 3, wherein the connection between said further optical fibre (5) and said light source (1) is established via a fibre-optical switch (2).

5. Arrangement as claimed in claim 3, wherein said further light fibre (5) is alternatively exchangeable for the connection provided by said first and said second optical fibre (3, 6).

6. Arrangement as claimed in claim 3, wherein the connections via said first and said second optical fibre (3, 6) with connections via said further optical fibre (5) are optionally and alternatingly disconnected or connected via respective optical shutters.

7. Arrangement as claimed in claim 3, wherein said sensor producing the spectral shift is a moisture sensor.

8. Arrangement as claimed in claim 3, wherein said sensor producing the spectral shift is a sensor varying its transmission and reflection, respectively, in dependence on temperature.

9. Arrangement as claimed in claim 3, wherein a chemical sensor is employed as sensor producing the spectral shift.

10. Arrangement as claimed in claim 3, wherein sensors are employed detecting a plurality of different or equal physical and/or chemical values.

## Revendications

1. Procédé permettant de déterminer le décalage spectral causé par des effets physiques ou chimiques, et ce au moyen d'au moins un détecteur causant de tels décalages et en utilisant des ensembles et unités d'analyse dispersifs de longueurs d'ondes, caractérisé en ce que
a) la lumière émise par une source lumineuse à large bande est transmise par une fibre optique unique au détecteur causant des décalages spectraux, puis conduite de celui-ci par l'intermédiaire d'un ensemble dispersif ou polychromatique vers une unité d'analyse enregistrant les répartitions spectrales, le spectre obtenu étant alors mémorisé,
b) la lumière émise par la même source lumineuse est directement transmise par une fibre optique unique à l'ensemble dispersif ou polychromatique, le spectre de référence ainsi obtenu étant mémorisé,
c) au cours d'une phase de calibrage à effectuer au moins une fois, un enregistrement spectral des grandeurs physiques ou chimiques à mesurer est réalisé comme décrit sous a) dans des conditions d'étalonnage et en procédant à des modifications ciblées dont les données seront également enregistrées comme données de calibrage,
d) la lumière émise par la source lumineuse est à nouveau directement transmise par une autre fibre optique à l'ensemble dispersif ou polychromatique, le spectre de référence ainsi obtenu étant mémorisé,
e) une valeur mesurée corrigée ou un spectre de calibrage corrigé est mémorisé après avoir été obtenu par formation des quotients des spectres respectivement obtenus selon b) et a) et selon d) et c),
f) suite à ces opérations, la valeur de la grandeur physique ou chimique à mesurer est immédiatement déterminée dans des conditions de mesures par comparaison directe des spectres obtenus sous e).

2. Procédé selon la revendication 1 caractérisé en ce que les spectres mentionnés sont mémorisés par un procédé électronique.

3. Dispositif destiné à la mise en oeuvre du procédé selon la revendication 1 équipé d'au moins deux conducteurs optiques assurant la transmission sur deux voies dont l'une sert de référence, et
caractérisé en ce qu'il est constitué
d'une source lumineuse à large bande (1) alimente une première fibre optique (3) faisant partie de la première voie optique,
d'au moins un détecteur (4) causant un décalage spectral et relié à la première fibre optique,
d'un ensemble dispersif ou polychromatique (10) avec des unités d'analyse spectrale correspondantes,
d'une seconde fibre optique (6) faisant partie de la première voie optique et conduisant du détecteur (4) vers l'ensemble (10),
cet ensemble (10) pouvant lui-même être directement refié à la source lumineuse à large bande (1) par une autre libre optique (5) constituant la seconde voie optique.

4. Dispositif selon la revendication 3 caractérisé en ce que la connexion de la fibre optique supplémentaire (5) avec la source lumineuse (1) est réalisée au moyen d'un commutateur à fibres optiques (2).

5. Dispositif selon la revendication 3 caractérisé en ce que la libre optique supplémentaire (5) est interchangeable alternativement avec la connexion réalisée par l'intermédiaire de la première et de la seconde fibre optique (3, 6).

6. Dispositif selon la revendication 3 caractérisé en ce que les connexions réalisées par l'intermédiaire de la première et de la seconde fibre optique (3, 6) avec la connexion par la fibre optique supplémentaire (5) sont, au choix, alternativement interrompues ou libérées au moyen d'obturateurs optiques correspondants.

7. Dispositif selon la revendication 3 caractérisé en ce que le détecteur générateur de décalages spectraux mis en oeuvre est un détecteur d'humidité.

8. Dispositif selon la revendication 3 caractérisé en ce que le détecteur générateur de décalages spectraux mis en oeuvre est un détecteur dont la transmission ou réflexion varient en fonction de la température.

9. Dispositif selon la revendication 3 caractérisé en ce que le détecteur générateur de décalages spectraux mis en oeuvre est un détecteur chimique.

10. Dispositif selon la revendication 3 caractérisé en ce qu'il met en oeuvre plusieurs détecteurs identiques ou différents pour la détection de grandeurs physiques et/ou chimiques.
